# EUROPEAN PATENT SPECIFICATION

(11) **EP 4 567 718 B1**
(45) Date of publication and mention of the grant of the patent: **15.10.2025**
(21) Application number: 23214485.7
(22) Date of filing: 06.12.2023
(51) Int. Cl.: G06T 5/73, G06T 5/94, G06T 7/194, G06T 5/40, H04N 25/57, G06T 7/11, H04N 5/33, H04N 5/222

(54) **METHOD FOR THERMAL IMAGE PROCESSING**
VERFAHREN ZUR VERARBEITUNG VON WÄRMEBILDERN
PROCÉDÉ DE TRAITEMENT D'IMAGES THERMIQUES

(43) Date of publication of application: 11.06.2025
(73) Proprietor: Axis AB, 223 69 Lund (SE)
(72) Inventor: Winzell, Thomas, 223 69 Lund (SE)
(74) Representative: AWA Sweden AB

(56) References cited:
- KR-B1- 101 595 368
- US-A1- 2018 225 522
- LEE EUNYOUNG ET AL: "Effective small target enhancement and detection in infrared images using saliency map and image intensity", OPTICAL REVIEW, SPRINGER VERLAG, TOKYO, JP, vol. 22, no. 4, 30 June 2015 (2015-06-30), pages 659 - 668, XP035521907, ISSN: 1340-6000, [retrieved on 20150630], DOI: 10.1007/S10043-015-0110-9
- ZHAO MINGJING ET AL: "Single-Frame Infrared Small-Target Detection: A survey", IEEE GEOSCIENCE AND REMOTE SENSING MAGAZINE, IEEE, USA, vol. 10, no. 2, 1 June 2022 (2022-06-01), pages 87 - 119, XP011914262, ISSN: 2473-2397, [retrieved on 20220216], DOI: 10.1109/MGRS.2022.3145502
- LU DEYONG ET AL: "IISTD: Image Inpainting-Based Small Target Detection in a Single Infrared Image", IEEE JOURNAL OF SELECTED TOPICS IN APPLIED EARTH OBSERVATIONS AND REMOTE SENSING, vol. 15, 1 January 2022 (2022-01-01), USA, pages 7076 - 7087, XP093284879, ISSN: 1939-1404, DOI: 10.1109/JSTARS.2022.3200380
- SOUNDRAPANDIYAN RAJKUMAR ET AL: "A comprehensive survey on image enhancement techniques with special emphasis on infrared images", MULTIMEDIA TOOLS AND APPLICATIONS, KLUWER ACADEMIC PUBLISHERS, BOSTON, US, vol. 81, no. 7, 4 August 2021 (2021-08-04), pages 9045 - 9077, XP037745646, ISSN: 1380-7501, [retrieved on 20210804], DOI: 10.1007/S11042-021-11250-Y

## Description

### TECHNICAL FIELD

The present invention generally relates to a method for thermal image processing, and a corresponding thermal camera and computer program product.

### BACKGROUND

Thermal cameras are used in various monitoring applications and enable thermal imaging of a scene as well as remote temperature monitoring, for instance for early fire detection and/or detecting over-heating of an object in the monitored scene.

Thermal cameras often employ an image sensor based on an array of microbolometer sensors. State-of-the-art microbolometer sensors may offer a high signal-to-noise ratio (SNR). The dynamic range is however typically limited to about 100°C, and for sensitive monitoring applications the dynamic range may even be less than 50 °C. In monitoring applications involving high levels of radiance, the thermal camera hence often needs to be purposefully configured to accurately capture the maximum radiance in the scene.

One approach for increasing the dynamic range is to decrease the integration time during image capture. This however leads to a reduced signal level and hence a reduced SNR (the signal noise is basically signal-independent for microbolometers). A decreased integration time accordingly enables measurement of higher levels of radiance at the cost of a reduced sensitivity. A reduced sensitivity will further result in a loss of contrast in the thermal image, especially when no high temperature object ("hot object") is present in the scene, which may make it more difficult to distinguish and track objects, manually or using automatic image recognition algorithms.

The paper "Effective small target enhancement and detection in infrared images using saliency map and image intensity" (Lee Eunyoung et al, Optical review, Springer Verlag, Tokyo, JP, vol. 22, no. 4, 30 June 2015, pages 659-668, ISSN: 1340-6000, DOI: 10.1007/S10043-015-0110-9) discloses "a small target enhancement and detection method for infrared (IR) images in complex backgrounds" which applies a saliency map to enhance targets using their shape and temperature information.

The paper "Single-Frame Infrared Small-Target Detection: A Survey" (Zhao Mingjing et al, IEEE Geoscience and Remote Sensing Magazine, IEEE, USA, vol. 10 no. 2, 1 June 2022, pages 87-119, ISSN: 2473-2397, DOI:10.1109/MGRS.2022.3145502) reviews single-frame infrared small-target detection methods.

US 2018/0225522 A1 discloses an image enhancement method for video analysis or automatic video surveillance systems. The method includes at least one processing stage in which the contrast of the captured image is enhanced by the image acquisition device through the image's depth or scene information obtained directly or indirectly by the scene calibration system or entered manually by the user.

KR 101 595 368 discloses a method for eliminating hot atmosphere for feature tracking in thermal infrared images

### SUMMARY

In view of the above, it is an object of the present invention to provide a method for thermal image processing enabling an increase in contrast in a thermal image. More specifically, it is an object to enable an increased contrast in regions of a thermal image not covered by any "hot object", e.g. regions of lower contrast in the thermal image. It is further an object to enable an increased contrast in a low-complexity and computationally efficient manner, which may lend itself for a computationally efficient implementation in a processing device (such as an FPGA) of a thermal image processing system.

Hence, according to a first aspect of the present invention, there is provided a method for thermal image processing in accordance with claim 1.

The method of the first aspect enables a contrast of the thermal image to be increased in a manner which may be implemented in a simple and computationally efficient manner. The contrast enhancement step provides sharpening of the blurred edge region. The sharpening is enabled without the need to resort to a full and relatively computationally complex deconvolution. A deconvolution could also modify pixel values of the actual object pixels. Rather, the contrast enhancement step may employ comparably simple arithmetic which lends itself favorably for computationally efficient implementations in a processing device (such as an FPGA) of a thermal image processing pipeline.

An enhanced contrast or sharpness in the thermal image may facilitate monitoring activities such as distinguishing and tracking objects, manually or using automatic image recognition algorithms.

According to the method, each apparent object region is identified as a contiguous region of pixels which both meets an intensity requirement (i.e. differing from the representative background intensity by more than a threshold intensity) and a size requirement (i.e. exceeding a threshold size). Underlying the identification is the insight that if an apparent object region is of a sufficient size (i.e. exceeding the threshold size), the apparent object region will comprise at least one "actual object pixel" which is located sufficiently far from the "actual background pixels" that the pixel will comprise a radiance contribution from the object but not the thermal background. An "actual object pixel" is thus "actual" or "true" in the sense that its intensity corresponds to the actual or true radiance received from the object. In contrast, pixels of the apparent object region located closer to the "actual" background pixels are "blurred edge pixels" comprising a radiance contribution from both the object and the thermal background. A "blurred edge pixel" may in the following also be referred to as a "mixed pixel", as it comprises a mixture of the radiance of the object and the thermal background.

The "intensity requirement" will typically be that the pixels of the apparent object region exceeds the representative background intensity by more than a threshold intensity. This means that the apparent object region may depict an object which is hotter than the thermal background. However, it is envisaged that the approaches set out herein is applicable also to blurred image regions depicting objects which are cooler than the background wherein the "intensity requirement" accordingly may correspond to the pixel intensities of the apparent object region falling below the representative background intensity by more than the threshold intensity. For conciseness and ease of explanation, the following description will however refer mainly to apparent object regions depicting objects hotter than the thermal background.

Having selectively identified one or more such apparent object regions, the method proceeds, for each such region, to partition the blurred edge region into a background edge region and an object edge region. By "partitioning" the blurred edge region into a background edge region and an object edge region is here meant designating or determining each pixel of the blurred edge region as belonging to, or being a pixel of, either the background edge region or the object edge region. The background edge region and the object edge region are thus respective sub-regions of the blurred edge region.

While the precise location of a boundary between the background and object edge regions within the blurred edge region may be unknown, it may be assumed that the "actual" edge pixels of the object region (i.e. the pixels which in absence of blurring would define the edge or perimeter pixels of the object region) are comprised somewhere within the blurred edge region and closer to the actual object region than an (outer) boundary of the apparent object region. Since the diffraction-induced blur radius in a state-of-the art thermal image camera typically is on the order of a few pixels (e.g. less than 10 pixels), to be contrasted with the considerably higher full resolution of their thermal image sensor (e.g. 160×120 or greater), it is further contemplated that a discrepancy between the determined partition and a location of "actual" edge pixels will have a relatively minor impact on the usability of the thermal image for monitoring purposes. That is, such a discrepancy will result in an enlargement or reduction of the contrast-enhanced object region by one or a few pixels. Various embodiments for determining the location of the boundary between the object and background edge regions within the blurred edge region, with various degrees of precision, are set out in the following.

Having partitioned the blurred edge region of each apparent object region, the contrast enhancement (i.e. sharpening) of each blurred edge region may be applied based on pixel intensities of the respective actual object pixel(s) (which as noted above correspond to the actual radiance received from the object) and the representative background intensity. In addition to being computationally simple, the contrast enhancement may be provided without overshoot or undershoot, as is characteristic for conventional edge sharpening approaches based, e.g., on high-frequency filtering.

By "pixel intensity" (interchangeably "pixel value") is here meant an intensity (or value) of a pixel in a thermal image. For a thermal image, the intensity of a pixel reflects the radiance received from the scene at the pixel. The intensity may also be interpreted as the amount or IR radiation, or the radiant flux received from the scene at the pixel. The intensity is related to temperature via Planck's radiation law. Provided the camera is calibrated, the pixel intensity may hence be accurately translated to temperature.

In some embodiments, partitioning the blurred edge region comprises:
identifying a boundary of the actual object region (termed "second boundary") extending inside a boundary of the apparent object region (termed "first boundary") at a distance corresponding to a predetermined blur diameter; and
designating pixels of the blurred edge region located within a predetermined fraction of said distance from the second boundary as pixels of the object edge region, and pixels of the blurred edge region located outside the predetermined fraction of said distance from the second boundary as pixels of the background edge region.

Hence, the blurred edge region may be partitioned into the object edge region and the background edge region by designating a subset of the pixels of the blurred edge region located closer to the actual object region as the object edge region and designating a subset of the pixels of the blurred edge region located farther from the actual object region (e.g., closer to the background) as the background edge region. Since the distance between the first and second boundaries corresponds to the predetermined blur diameter (i.e. the blurring range of the diffraction-induced blurring), the predetermined fraction of this distance allows estimating the location of the "actual" boundary or edge pixels of the object region (i.e. where the boundary of the object region would be located in absence of blurring). Pixels on different sides of this boundary may hence be identified as background pixels and object pixels, respectively.

The predetermined fraction may be in a range from 0.3 to 0.7, or 0.4 to 0.6, such as about 0.5. A predetermined fraction in these ranges amount to progressively more accurate estimates of where actual boundary of a non-blurred object region would be located, assuming an approximately Gaussian blurring. A predetermined fraction of about 0.5 is roughly equivalent to setting the inner 50% of the pixels of the blurred edge region to a representative object intensity and the outer 50% of the pixels of the blurred edge region to a representative background intensity.

The location of the (second) boundary of the actual object region may in general be estimated from a location of the boundary of the apparent object region (which is known from identification of the apparent object regions) and the predetermined blur diameter.

In some embodiments, identifying the second boundary comprises identifying pixels of the apparent object region with a smallest distance to the first boundary corresponding to the predetermined blur diameter.

In some embodiments, each respective pixel of the object edge region is set to a respective representative object intensity determined from one or more actual object pixels of the actual object region closest to the respective pixel of the object edge region. Hence, the pixel intensities of the pixels in the object edge region may be individually set to more closely match the pixel intensity (or intensities) of the closest boundary pixel(s) of the actual object region. This enables a smoother transition between the actual object region and the contrast-enhanced object region.

In some embodiments, identifying the set of apparent object regions comprises:
identifying a set of candidate object regions in the thermal image, wherein candidate object region is identified as a contiguous region of pixels having pixel intensities differing from (e.g., exceeding) the representative background intensity by more than the threshold intensity; and
determining a filtered set of candidate object regions by excluding, from the set of candidate object regions, candidate regions of a size not exceeding the threshold size, wherein the set of apparent object regions is identified as the filtered set of candidate object regions.

The set of apparent object regions may thus be identified in a two-step approach, wherein the first step finds pixel regions of sufficiently high intensity relative the background intensity, and the second step filters out such pixel regions which are too small to include any actual object pixel. This facilitates a computationally efficient implementation.

In some embodiments, the method further comprises obtaining a noise level estimate for the thermal camera, and determining the threshold intensity based on the noise level estimate.

The noise level of the thermal camera sets a lower bound below which the "object pixels" may not be distinguished from the thermal background. The noise level for the thermal camera hence represents a conservative basis for determining the threshold intensity.

In some embodiments, the representative object intensity is determined as one of: a mean, a median, a maximum, a minimum and a mode of the one or more actual object pixels of the respective actual object region. If an actual object region comprises varying pixel intensities, a single representative pixel intensity for the region may be determined and used to set the pixel intensities of the pixels of the object edge region. This may enable a computationally efficient implementation, and also avoid abrupt changes in intensity between the actual object region and the object edge region.

In some embodiments, the method further comprising obtaining a frequency distribution of pixel values of the thermal image, wherein the representative background intensity is determined as a representative pixel intensity of at least a portion of the frequency distribution. A representative estimate of the background intensity (i.e. radiance) of the scene may thus be estimated from statistics of the distribution of pixel intensities in the thermal image. This enables a reliable and computationally efficient implementation of dynamically estimating the intensity of the thermal background.

The representative pixel value may be one of: a mean, a median, a weighted mean and a mode of the at least a portion of the frequency distribution. These statistics each enable a reliable estimate of a representative background intensity from a frequency distribution.

In some embodiments, the method further comprises identifying at least a first peak region in the frequency distribution, wherein the representative pixel value is determined from pixel values within the first peak region.

By "peak in the frequency distribution" is here meant a pixel intensity, or an interval of at least a predefined number of consecutive pixel intensities (i.e. values), e.g. one or more bins or sub-ranges of the frequency distribution, for which the frequency exceeds a predefined minimum frequency.

The background radiance in the scene will typically be confined to some interval within the frequency distribution (the absolute position being dependent on the absolute temperature) and hence give rise to a peak region in the frequency distribution. Identifying such a "background peak" and determining the representative pixel intensity from pixel intensities within the peak hence enables a reliable estimation of the background intensity.

In some embodiments, the method further comprises identifying a second peak region in the frequency distribution, wherein the representative pixel intensity is determined from the pixel intensities within the first peak region but not pixel intensities within the second peak region.

Some scenes may include areas or objects providing a significant contribution of radiance different from an actual thermal background to the monitored object (whose radiance is to be estimated). Non-limiting examples are a scene including a relatively large area with a clear sky, a surface of water (e.g. a lake or sea, a river) with a temperature differing from the ground on which the monitored object is located. Another example may be a "hot object" with a temperature / radiance level being an outlier relative the temperature / radiance levels of the other parts of the scene. By filtering the frequency distribution to exclude peak regions originating from such non-background sources, a more accurate estimate of a representative background intensity for the each object region may be obtained.

It is here to be noted that the terms "first" and "second" merely are labels introduced to facilitate reference to the respective peak regions and do not indicate any order or significance of the peaks. Indeed, the first peak region (background peak region) may be found either at higher or lower pixel intensities than the second peak region (non-background peak region).

In some embodiments, the thermal image comprises raw thermal image data. The contrast enhancement may thus be based on the pixel intensities of the thermal image prior to non-linearization of the raw thermal image data. Non-linearization of the raw thermal image data (interchangeably "raw signal") captured from the thermal image sensor may produce transformed image data with a compressed dynamic range more suitable for viewing by a human and less resource intensive to process further down in the image processing chain. However, a side effect of the non-linearization is a changed distribution of pixel intensities. The relationship between the thermal background and the intensities of the object regions may thus deviate from the actual dynamics within the scene. Accordingly, by basing the method on the pixel intensities of the raw thermal image data, the contrast enhancement may be performed early in the processing chain, prior to introducing such distortion in the thermal data. Thus, any reference to pixels and pixel intensities in the above may be understood as references to pixels and pixel intensities of the raw thermal image data. In particular, the representative object pixel intensities and the representative background intensity may be determined from pixel values in the raw thermal image data. Moreover, the frequency distribution may be a frequency distribution of pixel intensities of the raw thermal image data.

According to a second aspect, there is provided a computer program product comprising computer program code portions configured to perform the method according to the first aspect or any of the embodiments thereof, when executed by a processing device.

According to a third aspect, there is provided a thermal camera comprising a processing device configured to perform the method according to the first aspect or any of the embodiments thereof.

The second and third aspects feature the same or equivalent benefits as the first aspect. Any functions described in relation to the first aspect, may have corresponding features in a system and vice versa.

### BRIEF DESCRIPTION OF THE DRAWINGS

This and other aspects of the present invention will now be described in more detail, with reference to the appended drawings showing embodiments of the present invention.
Fig. 1 is a schematic depiction of an implementation of a thermal camera.
Fig. 2 shows a block diagram of an implementation of an image processing pipeline for a thermal camera.
Fig. 3 schematically shows a thermal image comprising a number of apparent object regions.
Fig. 4 schematically shows an example apparent object region of the thermal image and a corresponding plot of pixel values along a row of pixels extending across an apparent object region of the thermal image.
Fig. 5 is a flow chart of a method for processing a thermal image.
Fig. 6a-b schematically show example frequency distributions of thermal images for different scenes.

### DETAILED DESCRIPTION

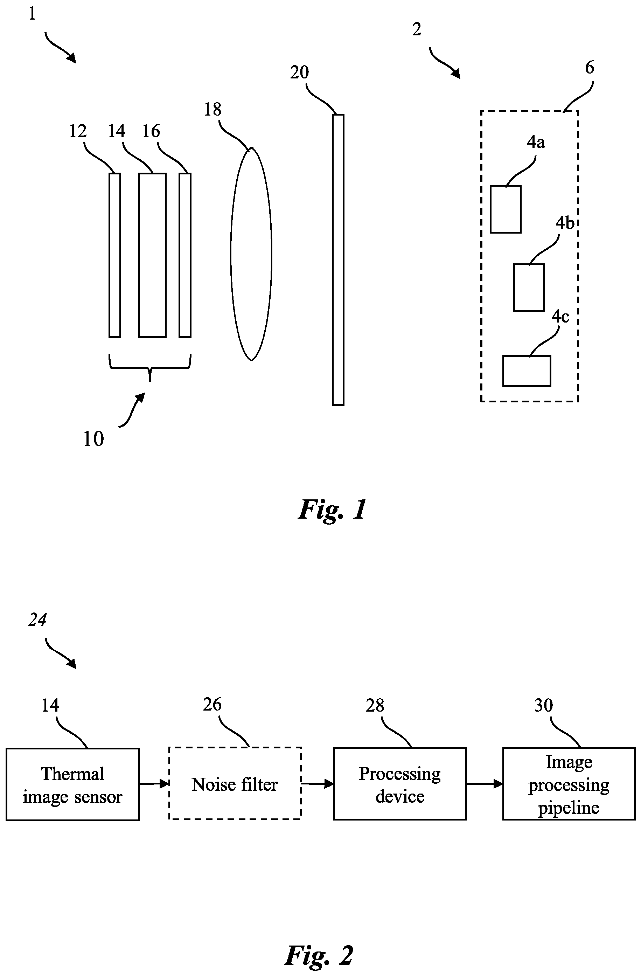

Fig. 1 schematically shows an example implementation of a thermal camera 1 comprising a thermal image sensor 14 (interchangeably "image sensor 14"). The thermal camera 1 may more specifically be a radiometric thermal camera 1. The thermal camera 1 may be calibrated such that the pixel values recorded by the image sensor 14 may be accurately translated to the temperatures within a scene 2 monitored by the thermal camera 1 (i.e. via Planck's radiation law). However, the present disclosure is applicable also to uncalibrated thermal cameras. The image sensor 14 may be of a conventional type, such as a microbolometer sensor comprising a pixel array of microbolometers. A microbolometer sensor may efficiently detect IR radiation in a range of about 7-14 µm. Microbolometer sensors are commercially available in various resolutions, such as 160×120 pixels, 1024×1024 pixels, 1920×1080 pixels and greater. The image sensor 14 may as shown in Fig. 1 form part of a sensor package 10 further comprising a reflector 12 arranged behind the image sensor 14 and a sensor window 16 arranged in front of the image sensor 14. The reflector 12 may boost the effective fill factor of the image sensor 14 and may for example be a λ/4 reflector of Au. The sensor package 10 may in some implementations be a vacuum package, wherein the window 16 (which e.g. may be formed of Si) may be arranged as a vacuum seal of the sensor package 10.

The thermal camera 1 further comprises an optical system 18 and a cover 20. In Fig. 1 the optical system 18 is for simplicity shown as a single lens but may in general comprise a number of beamforming optical elements such as lenses and optical filters. The cover 20 is formed of a material transparent to IR radiation in the wavelength range of interest. One example material for the cover 20 is Ge. The optical elements as well as the cover 20 may further be provided with an anti-reflection (AR) coating to reduce internal reflections within the thermal camera 1. One example of a conventional AR coating is Diamond-Like-Coating (DLC).

Fig. 2 is a block diagram of an example implementation of an image processing system 24 which may be comprised in the thermal camera 1, and in which embodiments of the present invention may be implemented.

The image processing system 24 comprises an image sensor 14, a processing device 28, and a downstream image processing pipeline 30.

The image sensor 14 acquires a thermal image of pixels with pixel values depending on the radiance contribution from the part of the scene 2 imaged on the corresponding pixels of the image sensor 14. The thermal image output by the image sensor 14 may comprise raw thermal image data including pixel intensities which have not yet been non-linearized. The non-linearization may further comprise reducing a bit depth of the thermal image data.

The thermal image comprising the raw thermal image data is received for processing by the processing device 28, as will be set out below. The processing device 28 may further forward the thermal image to the downstream image processing pipeline 30.

The downstream image processing pipeline 30 may implement a number of conventional sequential processing steps which for instance may serve to enhance and compress the thermal image data. Examples of such processing steps include noise reduction, global/local detail enhancement, sharpening etc. In particular, the image processing pipeline 30 may implement non-linearization of the raw thermal image data to produce a non-linearized thermal image better suited for viewing by a human than the pixels of the raw thermal image data, as well as bit-depth reduction.

The image processing system 24 may as shown further comprise a noise filter 26. The noise filter may comprise a temporal noise filter and/or a spatial noise filter. While in the illustrated example the noise filter 26 is shown upstream the processing device 28, it is also possible to implement the noise filter 26 downstream the processing device 28, such that the non-linearization and bit-depth reduction is applied prior to denoising.

The processing performed by the noise filter 26, the processing device 28 and the image processing pipeline 30 may be implemented in both hardware and software. In a hardware implementation, each of the method steps set out herein may be realized in dedicated circuitry. The circuitry may be in the form of one or more integrated circuits, such as one or more application specific integrated circuits (ASICs) or one or more field-programmable gate arrays (FGPAs). In a software implementation, the circuitry may instead be in the form of a processor, such as a central processing unit or a graphical processing unit, which in association with computer code instructions stored on a (non-transitory) computer-readable medium, such as a non-volatile memory, causes the processing device 28 to carry out the respective processing steps. Examples of non-volatile memory include read-only memory, flash memory, ferroelectric RAM, magnetic computer storage devices, optical discs, and the like. It is to be understood that it is also possible to have a combination of a hardware and a software implementation, meaning that some method steps may be implemented in dedicated circuitry and others in software.

Referring again to Fig. 1, the scene 2 comprises a number of schematically shown objects 4a-c. The dashed box 6 schematically indicates a thermal background of the scene 2, which accordingly forms the thermal background to the objects 4a-c.

By "object" is here generally meant a physical structure or feature within the scene 2, natural or manmade, stationary or moving. An object may also refer to a part of such a physical structure or feature comprised in the scene 2. For instance, an object may refer to a part of a building structure, road, tree, vehicle, etc., comprised in the scene 2 such that the only the part is depicted in a thermal image captured by the thermal camera 1 monitoring the scene 2. An object may refer to an object or interest in the scene 2, e.g. being the subject of a remote temperature monitoring. However, an object may also be an object present in the scene but not per se being an object of interest. For instance, an object may form part of the environment of the scene 2 in which further objects of interest are present.

During image acquisition, radiation emitted from the scene 2 is received by the thermal camera 1, shaped by the optical system 18 and focused onto the pixel array of the image sensor 14. While being transmitted through the optical system 18, the radiation received from the scene 2 will be diffracted. Assuming the diffraction is comparable to the pixel size of the image sensor 14, the diffraction will be seen as a blurring of the edges of the scene 2 in the thermal image and hence a reduced contrast in the thermal image. The object edges in the thermal image will thus be depicted by blurred edge pixels including a blend of the radiance contribution from the object and a radiance contribution from the thermal background to the object. The smallest in-focus spot that may be imaged by the thermal camera 1 on the image sensor 14 at the diffraction-limit is the blur spot. The blur spot corresponds to the range of pixels over which each pixel is blurred (i.e. smeared or distributed).

It is contemplated that the main contribution to the blurring comes from diffraction of the incident radiation in the thermal camera 1 (e.g. in the optical system 18 thereof) during image capture. However, there may also be additional blurring due to defocusing of the object 4, and multiple reflections in the sensor package 10.

Distinguishing and tracking objects of low contrast may be challenging. The issue with low contrast object / regions in the thermal image may be especially pronounced in a monitoring application comprising an object which is hot, or which may become hot. In such a case, the dynamic range of the thermal camera 1 (and accordingly of the thermal image) may be less than the dynamic range of the scene 2. To avoid that the region of the thermal image depicting the hot object becomes overexposed, the thermal image may thus be captured with the thermal camera 1 configured (e.g. using a short integration time) such that the maximum pixel intensity of the hot object (corresponding to the maximum expected radiance level of the hot object) fits within the dynamic range of the thermal camera 1 and the thermal image. Any other objects of the scene 2 not being hot objects may thus be depicted in regions of relatively low contrast in the thermal image.

While the approaches of the present disclosure may be applied to a region of a thermal image depicting a "hot object", it is contemplated that the approaches in particular may be useful for regions depicting other objects in the scene, not being hot objects. That is, the objects 4a-c may be objects of comparably low contrast relative the thermal background of the scene 2.

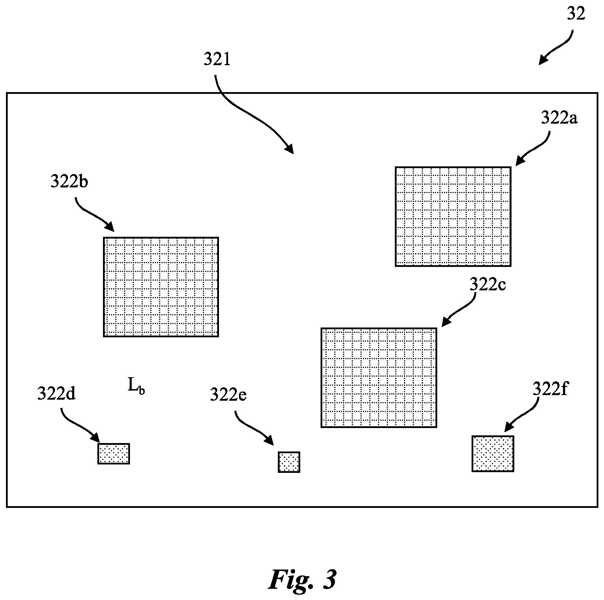

Fig. 3 schematically shows a representation of a thermal image 32 acquired by an image sensor of a thermal camera, such as the image sensor 14 of the thermal camera 1. The thermal image 32 comprises a first set of object regions 322a-c, each depicting a respective one of the objects 4a-c of the scene 2. The thermal image 32 comprises a background region 321 surrounding the first set of object regions 322a-c. The background region 321 depicts the thermal background 6 of the scene 2, which also forms the thermal background to the object 4. Due to among others diffraction during the image acquisition, as discussed above, each of the first set of object regions 322a-c is a blurred depiction of the respective object 4a-c. The first set of object regions 322a-c hence define a set of apparent object regions 322a-c.

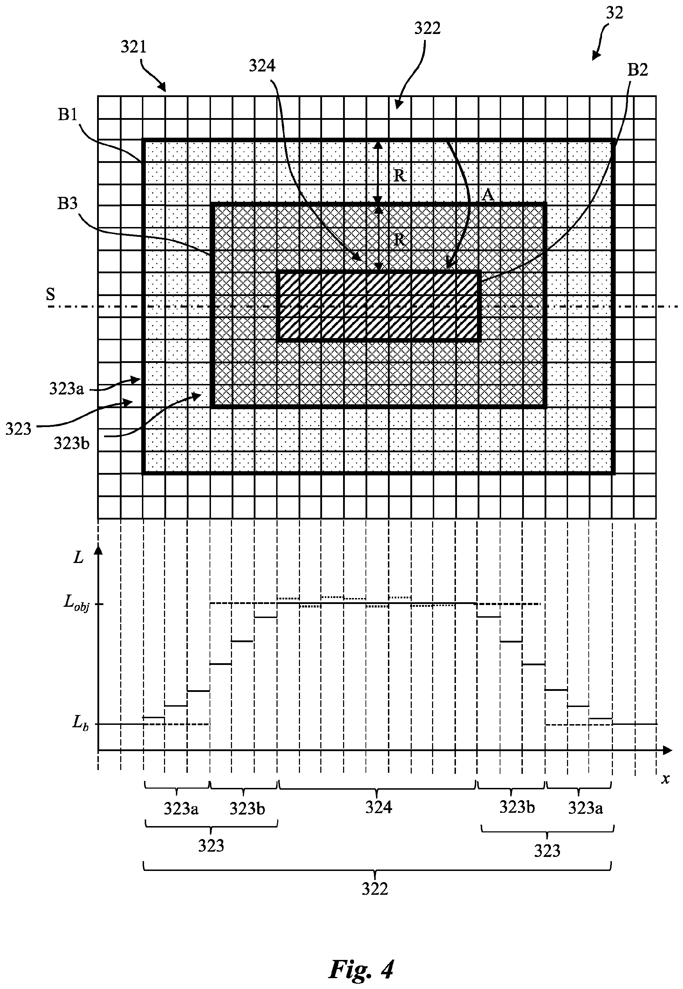

Fig. 4 schematically shows an enlarged view of an apparent object region 322 (e.g. either of the apparent object regions 322a-c) of the thermal image 32. The apparent object region 322 comprises an actual object region 324 of actual object pixels. The actual object region 324 is surrounded by a blurred edge region 323 of blurred edge pixels. The pixels of the actual object region 324 and the pixels of the blurred edge region 323 form a respective (strict) subset of pixels of the apparent object region 322.

Each actual object pixel of the actual object region 324 is separated from the background region 321 (i.e. formed of actual background pixels) by at least 2 times the blur radius (i.e. the blur diameter) of the characteristic blur spot, as indicated in Fig. 4. Correspondingly, each blurred edge pixel of the blurred edge region 323 is separated from the background region 321 by less than 2 times the blur radius. Each actual object pixel of the actual object region 324 accordingly includes a radiance contribution from the respective object 4a-c depicted in the respective apparent object region 322a-c, but not from the thermal background 6. That is, the respective object 4a-c, but not the thermal background 6, contributes to the pixel intensity of each actual object pixel. Correspondingly, each blurred pixel of the blurred edge region 323 includes a radiance contribution from the respective object 4a-c and the thermal background 6. That is, the radiance from both the respective object 4a-c and the thermal background 6, contributes to the pixel intensity of each blurred edge pixel.

This may further be seen in the lower portion of Fig. 4, showing a plot of pixel intensities along a row scan of pixels along the dash-dotted line S extending across a central portion of the apparent object region 322. As schematically indicated in the plot, the blurring modulates the actual object radiance *L_{obj}* profile of the object 4 (dashed line) into a broader apparent radiance profile with a smoother transition between the actual object radiance *L_{obj}* and the radiance *L_{b}* of the thermal background 6 (full line) in the blurred edge region 323.

In Fig. 4 the diffraction blurs the edges of the imaged object over 6 pixels, corresponding to a blur radius R of 3 pixels. As may be appreciated, a greater blur radius would result in additional widening. Furthermore, in the illustrated example the apparent object region 322 is 21x15 pixels and the actual object region 324 is 9x3 pixels. These are however merely examples and other dimensions and shapes of the apparent and actual object regions 322, 324 are also possible. A minimum size of the actual object region 324 to be processed by the method set out in the following is 1x1 pixels, such that the actual object region 324 comprises at least one actual object pixel.

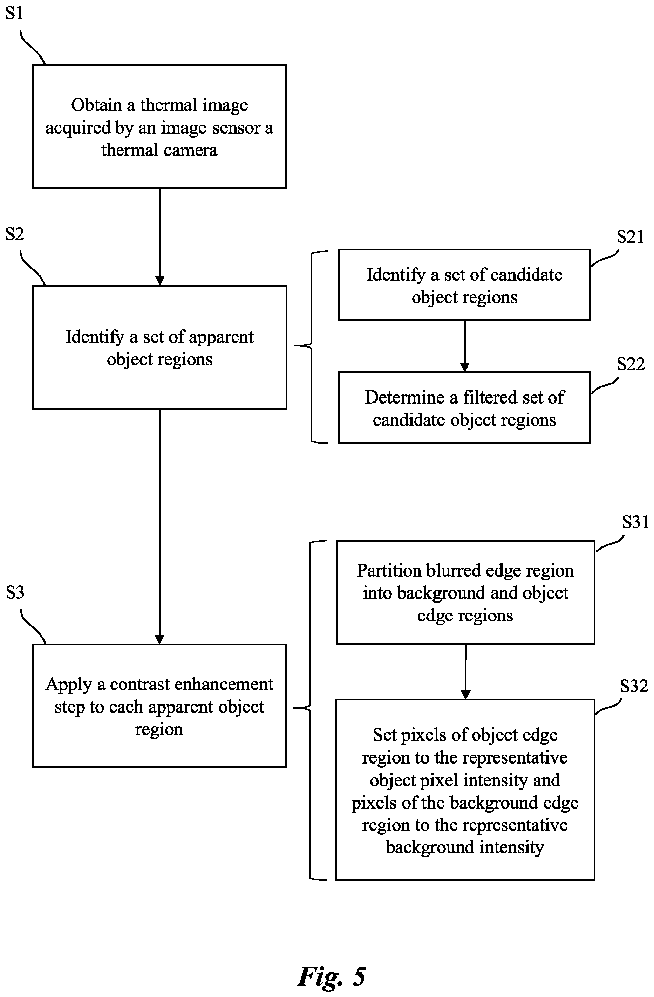

Implementations of a method for processing a thermal image, to provide an enhanced contrast, will now be described with reference to the flow chart of Fig. 5, and with further reference to Fig. 1-4.

At step S1, the processing device 28 obtains a thermal image 32 of the scene 2. The thermal image 32 is acquired by the image sensor 14 of the thermal camera 1.

At step S2, the processing devices 28 identifies a set of apparent object regions 322a-c in the thermal image 32, each including a depiction of a respective one of the set of objects 4a-c which is blurred due to diffraction in the thermal camera 1.

Each apparent object region 322a-c is identified as a contiguous region of pixels: (i) each pixel having an intensity differing from, typically exceeding, a representative background intensity of a thermal background of the scene 1 by more than a threshold intensity, and (ii) the contiguous region being of a size exceeding a threshold size such that the apparent object region 322a-c includes an actual object region 324 of at least one actual object pixel and a blurred edge region 323 of blurred edge pixels surrounding the actual object region 324.

To facilitate subsequent processing, the processing device 28 may represent the set of apparent object regions 322a-c in the form of a bit map, wherein each pixel of a respective apparent object region is assigned the value 1 and each pixel of the background region 321 is assigned the value 0.

Various approaches for determining a representative background intensity *L_{b}* are possible.

A representative background radiance may for instance be determined using a frequency distribution- or histogram-based approach. The processing device 28 may obtain a frequency distribution of pixel values of the thermal image 32 (which e.g. may be raw thermal image data). In some implementations, the processing device 28 may compute the frequency distribution of the pixel intensities of the thermal image 32. In other implementations, a frequency distribution may already be provided by the thermal image sensor 14, together with the thermal image 32. The processing device 28 may in this case obtain the frequency distribution by receiving the frequency distribution from the thermal image sensor 14. In either case, the frequency distribution may advantageously be defined for a plurality of bins of pixel intensities, partitioning the dynamic range of the thermal image. The number and width of the intensity bins may vary depending on the computing resources of the processing device 28, and on the required precision of the frequency distribution analysis. While a binned frequency distribution may reduce the computational resources required by the method, use of a non-binned frequency distribution is not precluded.

In either case, the processing device 28 may process the frequency distribution to determine the representative background intensity *L_{b}* as a representative pixel intensity of at least a portion of the frequency distribution. The representative pixel intensity may for instance be determined as one of: a mean, a median, a weighted mean and a mode of the at least a portion of the frequency distribution. The representative pixel intensity may be determined from the full frequency distribution (including the pixel intensities of all pixels of the thermal image 32) or from only a portion of the frequency distribution.

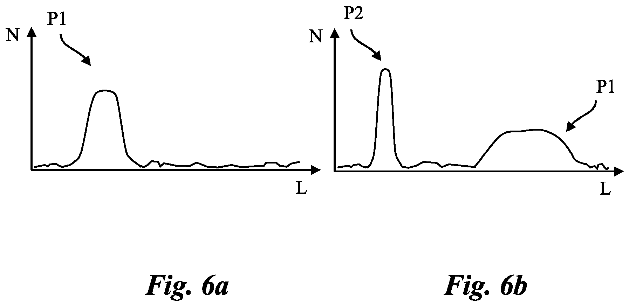

With reference to Fig. 6a showing an example of a frequency distribution, the processing device 28 may for instance identify at least a first peak region P1 in the frequency distribution, and determine the representative pixel intensity from pixel intensities within the first peak region P1. The background radiance in the scene 2 will typically be confined to some relatively broad interval within the frequency distribution (the absolute position being dependent on the absolute temperature) and hence give rise to a peak region in the frequency distribution (a mode of the peak being dependent among others on the width of the peak region P1 and on the total number of pixels of the thermal image 32). The representative pixel intensity may thus be determined as a mean, a median, a weighted mean or a mode of the pixel intensities of the first peak region P1 of the frequency distribution.

With reference to Fig. 6b showing another example of a frequency distribution, the processing device 28 may for instance further identify a second peak region P2 in the frequency distribution, and filter out the pixel intensities within the second peak region P2 when determining the representative pixel intensity such that the representative pixel intensity is determined from the pixel intensities within the first peak region P1 but not the pixel intensities within the second peak region P2. The second peak region P2 may for instance be excluded from the determination of the representative pixel intensity on the basis of being narrower than the first peak region P1, and/or being removed from a (e.g. predetermined) range of pixel intensities expected from the thermal background 6 by more than a threshold.

In case the scene comprises a hot object, the hot object may give rise to a further peak at pixel intensities above the first peak region P1. To avoid that the pixel intensities of the hot object peak biases the representative pixel intensity, the pixel intensities of the hot object peak may be excluded from the determination of the representative pixel intensity.

Instead of a frequency distribution-based approach for estimating the representative background intensity, the processing device 28 may according to a more simple implementation determine the representative background intensity as an average of the pixel intensities of all pixels of the thermal image 32, or of a region of the thermal image 32 which (e.g. based on a priori knowledge or a user-supplied input) is known to depict the thermal background 6.

The use of a threshold intensity when identifying the apparent object regions 322 allows pixels belonging to an apparent object region 322 to be distinguished from pixels belonging to the background region 321, while providing some tolerance for varying pixel intensities (e.g. due to noise) within the background region 321. The threshold intensity may be set to a predetermined value, determined from an assumed or measured variation of the pixel intensities (e.g. the three-sigma of the pixel intensities) within a region of the thermal image 32 known to depict the thermal background 6 of the scene 2 (e.g. based on a priori knowledge or a user supplied input).

In another implementation, the processing device 28 may obtain a noise level estimate for the thermal camera 1 and determine the threshold intensity based on the noise level estimate.

The processing device 28 may derive a noise level estimate from a noise threshold of the noise filter 26 of the thermal camera 1. Such a noise filter 26 has a threshold (which may be variable in dependence on capturing mode of the thermal camera 1) above which a signal read-out from a pixel of the image sensor 14 is considered to be real and not noise. The processing device 28 may accordingly derive a noise level estimate for the thermal camera 1 by obtaining (e.g. reading) the noise threshold from the noise filter 26. The thermal cameras 1 may have both a temporal noise filter (with a threshold set based on a sequence of acquired thermal images or frames) and a spatial noise filter (with a threshold set based on a single current thermal image), which collectively may define a spatio-temporal noise filter 26. The processing device 28 may in this case derive a noise level estimate for the thermal camera 1 based on the temporal and spatial noise thresholds of the spatio-temporal noise filter 26.

A noise level estimate may also be determined based on the noise equivalent temperature difference (NETD) of the image sensor 14. The NETD of the image sensor 14 may be transformed to an NETD for the thermal camera 1 and the thermal image 32 by scaling the NETD for the image sensor 14 with the f-number squared (where the f-number refers to the f-number used when capturing the thermal image 32). The NETD is a measure of how well the image sensor is able to distinguish between small differences in radiance in the scene 2.

Having obtained the noise level estimate, the processing device 28 may determine the intensity threshold as the noise level estimate, optionally scaled by a factor, typically greater than 1.

As noted above, the condition for a contiguous region of pixels with pixel intensities meeting the threshold intensity test, to be identified as an apparent object region 322, is that the contiguous region is of a size exceeding a threshold size. The threshold size is set such that, exceeding the threshold size, the contiguous pixel region includes an actual object region 324 of at least one actual object pixel and a blurred edge region 323 of blurred edge pixels surrounding the actual object region 324.

The threshold size may be defined in various manners. For instance, the threshold size may correspond to a blur radius or a blur diameter, either of which are indicative of a size of the blur spot. The radius (or diameter) may be obtained in terms of units of pixels, either an integer number pixels (e.g. 2 pixels, 3 pixels, etc.) or a fractional number of pixels (e.g. 1.5 pixel, 2.5 pixel, etc.). Having identified a contiguous region of pixels with pixel intensities exceeding the representative background intensity by more than the threshold intensity, the processing device 28 may, using the threshold size, determine whether the contiguous region comprises at least one pixel with a minimum distance to the background region 321 exceeding the blur diameter (or equivalently two times the blur radius). The processing device 28 may for instance evaluate this for only a center pixel of the contiguous region. The center pixel may be determined as the pixel at the center of mass or the centroid of the contiguous pixel region. The number of pixels to evaluate may hence be limited to a single pixel, which reduces the amount of pixel data to process. However, the processing device 28 may also search, e.g. exhaustively, the contiguous pixel region for at least one pixel with a minimum distance to the background region 321 exceeding the blur diameter.

In another example, the threshold size may be defined in terms of a bit map (i.e. binary mask) representing the shape and size of the blur spot. The processing device 28 may determine whether the blur spot can be aligned with the contiguous pixel region such that the blur spot is fully contained within the contiguous pixel region. In analogy with the preceding examples, this may be evaluated for only a single pixel (such as the center pixel) or a plurality of pixels of the contiguous pixel region (e.g. scanning the blur spot / bit map across the contiguous pixel region and determining if each pixel of the blur spot overlaps a pixel of the contiguous pixel region).

Regardless of how the threshold size is defined (e.g. in terms of a radius, diameter or as a bit map of the blur spot), the threshold size may be predetermined. The blur spot may be determined during characterization (e.g., typically off-line, prior to deployment) by measuring the modulation transfer function (MTF) of the thermal camera 1, or using some other conventional approach for characterizing the blurring of an imaging system. The blur radius or blur diameter may for instance be derived from the FWHM of a blurred feature of a test target (e.g. a line pattern or spot pattern) focused onto the image sensor and imaged by the thermal camera 1. In absence of a pre-characterization, the size of the blur spot may be estimated from the diffraction limit, i.e. approximately 2.44 * wavelength * f-number of the optical system 18 of the thermal camera 1. For a typical thermal camera this will in practice be about 25-30 µm, which in turn corresponds to a blur diameter of about 1.5-2.0 pixels for a 17 µm pixel pitch, and 2-3 pixels for a 12 µm pixel pitch.

In either approach, if the contiguous region does not exceed the threshold size the contiguous region may be excluded from the set of apparent object regions 322a-c. With reference to Fig. 3, the thermal image 32 may as shown further comprise a second set of object regions 322d-f of a size too small to include any actual object pixel comprising only a radiance contribution from the thermal background 6. The comparison based on the threshold size allows such small object regions to be excluded from the set of apparent object regions 322a-c.

As shown in Fig. 5, the identification of apparent object regions 322a-c may comprise a two-step approach: At S21, the processing device 28 may identify a set of candidate object regions 322a-f in the thermal image 32. Each candidate object region 322a-f is identified as a contiguous region of pixels having pixel intensities exceeding the representative background intensity by more than the threshold intensity. At S22, the processing device 28 may filter the set of candidate object regions 322a-f to exclude candidate regions of a size not exceeding the threshold size (e.g. the second set of object regions 322d-f). The processing device 28 may accordingly identify the set of apparent object regions as the filtered set of candidate object regions 322a-c.

At S3, the processing device 28 applies a contrast enhancement step to each apparent object region 322a-c identified at step S2. The contrast enhancement step comprises, as shown in Fig. 5, two sub-steps S31 and S32 which will be described with reference to the example apparent region 322 in Fig. 4.

At S31 of the contrast enhancement step, the processing device 28 partitions the blurred edge region 323 of the respective apparent object region into a background edge region 323a and an object edge region 323b intermediate the actual object region 324 and the background edge region 323a.

The blurred edge region 323 may be partitioned by identifying a boundary B2 (second boundary) of the actual object region 324 extending inside the boundary B1 (first boundary) of the apparent object region 322 at a distance from the first boundary B1 corresponding to the predetermined blur diameter (i.e. two times the blur radius R). Subsequently, pixels of the blurred edge region 323 located within a predetermined fraction f of said distance from the second boundary B2 (i.e. within the fraction f of the blur diameter) may be identified as pixels of the object edge region 323b, and pixels of the blurred edge region 323 located outside the predetermined fraction f of the distance from the second boundary B2 may be identified as pixels of the background edge region 323a.

In the illustrated example, the fraction f=0.5, wherein the predetermined fraction of the distance corresponds to 0.5 times the blur diameter (i.e. the blur radius R). Accordingly, the boundary B3 partitioning the blurred edge region 323 into the background edge region 323a and the object edge region 323b is located half-way between the first and second boundaries B1, B2, i.e. one blur radius R from the first and second boundaries B1, B2. While this may represent a good approximation of where the edge of an object region would be located in absence of blurring, other choices are possible to account for blurring functions of other shapes (e.g., non-Gaussian) For instance, the predetermined fraction f may be in a range from 0.3 to 0.7, or 0.4 to 0.6, such as about 0.5. Regardless of the specific value of the fraction f, this partitioning approach is equivalent to assuming that pixels of the blurred edge region 323 located closer to the actual object region 324 are more likely to belong to the respective actual object region 324 than the background region 321. Conversely, pixels of the blurred edge region 323 located farther from the actual object region 324 are more likely to belong to the background region 321 than the respective actual object region 324.

The second boundary B2 of the actual object region 324 may be identified by identifying pixels of the apparent object region 322 such that a smallest distance between the identified pixels and the first boundary B1 corresponds (e.g., is equal to) the blur diameter 2*R. Since the coordinates of the first boundary B1 are known from identifying each apparent object region 322, the processing device 28 may accordingly, given the blur diameter 2*R, search for pixels within the apparent object region 322 which are separated from the first boundary B1 (and thus the background region 321) by the blur diameter 2*R, as schematically indicated by the arrow A in Fig. 4. This allows identifying or estimating the second boundary B2 of the actual object region 324 even for irregular shapes, as the shape of the second boundary B2 will inherently follow the shape of the first boundary B1.

In Fig. 4 the boundaries B1-B3 are shown to extend between neighboring pixels. However, the boundaries B1-B3 may in practice be represented by pixel coordinates of the pixels inside the respective boundaries B1-B3. That is, the boundaries B1-B3 may be defined by the perimeter or edge pixels of the respective regions.

The preceding example of a partitioning approach is merely one possible approach for partitioning the blurred edge region 323. In another example, the second boundary B2 may be determined without relying on the first boundary B1 or a predetermined blur diameter. First, a center pixel of the actual object region 324 may be estimated as a center pixel (e.g., a center of mass or a centroid) of the apparent region 322. That the actual object region 324 and the apparent object region 322 have the same center pixel is a reasonable assumption for many typical object shapes. Secondly, the pixels of the actual object region 324 may be identified as a contiguous region of pixels comprising the center pixel and having a pixel intensity within a predetermined tolerance from the center pixel intensity. The second boundary B2 may accordingly be identified as the boundary of the thus identified actual object region 324. The tolerance may be set in view of the blur radius R, such that a smaller tolerance is used in case of a smaller blur radius R (implying a steeper fall-off of the pixel intensities in the blurred edge region 323). Having identified the second boundary B2, the partitioning may proceed as set out above.

At S32 of the contrast enhancement step, the processing device 28 proceeds by setting pixels of the object edge region 323b to a representative object intensity determined from one or more actual object pixels of the actual object region 324, and pixels of the background edge region 323a to the representative background intensity. The representative object intensity may be determined as one of: a mean, a median, a maximum, a minimum and a mode of the one or more actual object pixels of the respective actual object region 324. The one or more actual object pixels may for instance be the center pixel (e.g., determined as the center of mass or the centroid of the apparent object region 322), or the center pixel and a predetermined number of pixels adjacent to the center pixel (provided the actual object region 324 is greater than 1x1 pixels). Each pixel of the object edge region 323b may be set to a same representative object pixel intensity. Optionally, each respective pixel of the object edge region 323b may be set to a respective representative object intensity determined from one or more actual object pixels of the actual object region 324 closest to the respective pixel of the object edge region 323b. In case of varying pixel intensities of the actual object region 324 along the boundary B2, the pixel intensities within the contrast-enhanced object edge region 323b may thus be set to match or track this variation. In a simple approach, each respective pixel of the object edge region 323b may be set to the pixel intensity of the closest pixel of the actual object region 324. In a more elaborate approach, any of the above-mentioned pixel statistics may be applied to a number of closest pixels of the actual object region 324, to determine a representative object intensity for each respective pixel of the object edge region 323b.

By the contrast enhancement step, pixels which in absence of the blurring would have a pixel value corresponding to the radiance of the depicted object may be set to a representative object intensity and pixels which in absence of the blurring would have a pixel value corresponding to the thermal background may be set to a representative background radiance. The blurred edge region 323 may hence be replaced by a sharpened edge region, defining a sharp edge along the third boundary B3.

The person skilled in the art realizes that the present invention by no means is limited to the embodiments described above. On the contrary, many modifications and variations are possible within the scope of the appended claims.

## Claims

1. A computer-implemented method for thermal image processing, the method comprising:
obtaining a thermal image (32) acquired by an image sensor of a thermal camera (1), wherein the thermal image depicts a scene (2) comprising a set of objects (4a-c);
identifying a set of apparent object regions (322a-c) in the thermal image (32),
wherein each apparent object region (322a-c) includes a depiction of a respective one of the set of objects (4a-c) which is blurred due to diffraction in the thermal camera, and
wherein each apparent object region (322) is identified as a contiguous region of pixels having pixel intensities differing from a representative background intensity of a thermal background of the scene (1) by more than a threshold intensity, and being of a size exceeding a threshold size such that the apparent object region (322) includes an actual object region (324) of at least one actual object pixel comprising a radiance contribution from the respective object (4a-c) but not the thermal background, and a blurred edge region (323) of blurred edge pixels surrounding the actual object region (324), each blurred edge pixel comprising a radiance contribution from both the object and the thermal background; and
applying to each apparent object region (322) a contrast enhancement step comprising:
partitioning the blurred edge region (323) into a background edge region (323a) and an object edge region (323b) intermediate the actual object region (324) and the background edge region (323a); and
setting pixels of the object edge region (323b) to a representative object intensity determined from one or more actual object pixels of the actual object region (324), and pixels of the background edge region (323a) to the representative background intensity, wherein the representative background intensity is determined as one of: a mean, a median, a weighted mean and a mode of at least a portion of a frequency distribution of pixel intensities of the thermal image, or as an average of the pixel intensities of all pixels of the thermal image, or as an average of the pixel intensities of a region of the thermal image known to depict the thermal background (6).

2. The method of claim 1, wherein partitioning the blurred edge region (323) comprises:
identifying a boundary (B2) of the actual object region (324) extending inside a boundary (B1) of the apparent object region (322) at a distance corresponding to a predetermined blurring range of the diffraction-induced blurring; and
designating pixels of the blurred edge region (323) located within a predetermined fraction of said distance from the boundary (B2) of the actual object region (324) as pixels of the object edge region (323b), and pixels of the blurred edge region (323) located outside the predetermined fraction of said distance from the boundary (B2) of the actual object region (324) as pixels of the background edge region (323a).

3. The method of claim 2, wherein the predetermined fraction is in a range from 0.3 to 0.7, or 0.4 to 0.6, such as about 0.5.

4. The method of any one of claims 2-3, wherein identifying the boundary (B2) of the actual object region (324) comprises identifying pixels of the apparent object region (322) with a smallest distance to the boundary (B1) of the apparent object region (322) corresponding to the blur diameter.

5. The method according to any one of the preceding claims, wherein identifying the set of apparent object regions (322a-c) comprises:
identifying a set of candidate object regions (322a-e) in the thermal image (32), wherein a candidate object region (322a-f) is identified as a contiguous region of pixels having pixel intensities differing from the representative background intensity by more than the threshold intensity; and
determining a filtered set of candidate object regions (322a-c) by excluding, from the set of candidate object regions (322a-f), candidate regions (322a-e) of a size not exceeding the threshold size, wherein the set of apparent object regions (322a-c) is identified as the filtered set of candidate object regions (322a-c).

6. The method according to any one of the preceding claims, further comprising obtaining a noise level estimate for the thermal camera (1), and determining the threshold intensity based on the noise level estimate.

7. The method according to any one of the preceding claims, wherein each respective pixel of the object edge region (323b) is set to a respective representative object intensity determined from one or more actual object pixels of the actual object region (324) closest to the respective pixel of the object edge region (323b).

8. The method according to any one of the preceding claims, wherein the representative object intensity is determined as one of: a mean, a median, a maximum, a minimum and a mode of the one or more actual object pixels.

9. The method according to any one of the preceding claims, further comprising identifying at least a first peak region (P1) in the frequency distribution, wherein the representative pixel intensity is determined from pixel values within the first peak region.

10. The method according to claim 9, further comprising identifying a second peak region (P2) in the frequency distribution, wherein the representative pixel intensity is determined from the pixel values within the first peak region (P1) but not pixel values within the second peak region (P2).

11. The method according to any one of the preceding claims, wherein the thermal image comprises raw thermal image data.

12. A computer program product comprising computer program code portions configured to perform the method according to any one of claims 1-11 when executed by a processing device (28).

13. A thermal camera (1) comprising a processing device (28) configured to perform the method according to any one of claims 1-11.

## Patentansprüche

1. Computerimplementiertes Verfahren für Wärmebildverarbeitung, das Verfahren umfassend:
Erlangen eines Wärmebilds (32), das durch einen Bildsensor einer Wärmekamera (1) erfasst wurde, wobei das Wärmebild eine Szene (2) darstellt, die einen Satz von Objekten (4a-c) umfasst,
Identifizieren eines Satzes von scheinbaren Objektregionen (322a-c) in dem Wärmebild (32),
wobei jede scheinbare Objektregion (322a-c) eine Darstellung eines jeweiligen einen des Satzes von Objekten (4a-c) enthält, das aufgrund von Diffraktion in der Wärmekamera unscharf ist, und
wobei jede scheinbare Objektregion (322) als eine zusammenhängende Region von Bildpunkten identifiziert wird, die Bildpunktintensitäten aufweisen, die sich von einer repräsentativen Hintergrundintensität eines thermischen Hintergrunds der Szene (1) um mehr als eine Schwellenintensität unterscheiden, und eine Größe aufweist, die eine Schwellengröße derart übersteigt, dass die scheinbare Objektregion (322) eine tatsächliche Objektregion (324) mindestens eines tatsächlichen Objektbildpunkts enthält, umfassend einen Strahlungsbeitrag von dem jeweiligen Objekt (4a-c), aber nicht den thermischen Hintergrund, und eine unscharfe Randregion (323) von unscharfen Randbildpunkten, die die tatsächliche Objektregion (324) umgeben, wobei jeder unscharfe Randbildpunkt einen Strahlungsbeitrag von sowohl dem Objekt als auch dem thermischen Hintergrund umfasst; und
Anwenden, auf jede scheinbare Objektregion (322), eines Kontrastverbesserungsschritts, umfassend:
Partitionieren der unscharfen Randregion (323) in eine Hintergrund-Randregion (323a) und eine Objekt-Randregion (323b) zwischen der tatsächlichen Objektregion (324) und der Hintergrund-Randregion (323a); und
Einstellen von Bildpunkten der Objekt-Randregion (323b) auf eine repräsentative Objektintensität, bestimmt aus einem oder mehreren tatsächlichen Objektbildpunkten der tatsächlichen Objektregion (324), und von Bildpunkten der Hintergrund-Randregion (323a) auf die repräsentativ Hintergrundintensität, wobei die repräsentative Hintergrundintensität als eine von folgenden bestimmt wird: ein Mittelwert, ein Median, ein gewichteter Mittelwert und ein Modalwert mindestens eines Abschnitts einer Häufigkeitsverteilung von Bildpunktintensitäten des Wärmebilds, oder als ein Durchschnitt der Bildpunktintensitäten sämtlicher Bildpunkte des Wärmebilds oder als ein Durchschnitt der Bildpunktintensitäten einer Region des Wärmebilds, von der bekannt ist, dass sie den thermischen Hintergrund (6) darstellt.

2. Verfahren nach Anspruch 1, wobei Partitionieren der unscharfen Randregion (323) umfasst:
Identifizieren einer Grenze (B2) der tatsächlichen Objektregion (324), die sich innerhalb einer Grenze (B1) der scheinbaren Objektregion (322) in einer Distanz korrespondierend mit einem im Voraus bestimmten Unschärfebereich der diffraktionsinduzierten Unschärfe erstreckt; und
Kennzeichnen von Bildpunkten der unscharfen Randregion (323), die sich innerhalb einer im Voraus bestimmten Fraktion der Distanz von der Grenze (B2) der tatsächlichen Objektregion (324) befinden, als Bildpunkte der Objekt-Randregion (323b), und Bildpunkte der unscharfen Randregion (323), die sich außerhalb der im Voraus bestimmten Fraktion der Distanz von der Grenze (B2) der tatsächlichen Objektregion (324) befinden, als Bildpunkte der Hintergrund-Randregion (323a).

3. Verfahren nach Anspruch 2, wobei die im Voraus bestimmte Fraktion in einem Bereich von 0,3 bis 0,7 oder 0,4 bis 0,6 wie etwa 0,5 ist.

4. Verfahren nach einem der Ansprüche 2-3, wobei Identifizieren der Grenze (B2) der tatsächlichen Objektregion (324) Identifizieren von Bildpunkten der scheinbaren Objektregion (322) mit einer kleinsten Distanz zu der Grenze (B1) der scheinbaren Objektregion (322) korrespondierend mit dem Unschärfedurchmesser umfasst.

5. Verfahren nach einem der vorhergehenden Ansprüche, wobei Identifizieren des Satzes von scheinbaren Objektregionen (322a-c) umfasst:
Identifizieren eines Satzes von Kandidaten-Objektregionen (322a-e) in dem Wärmebild (32), wobei eine Kandidaten-Objektregion (322a-f) als eine zusammenhängende Region von Bildpunkten identifiziert wird, die Bildpunktintensitäten aufweisen, die sich von der repräsentativen Hintergrundintensität um mehr als die Schwellenintensität unterscheiden; und
Bestimmen eines gefilterten Satzes von Kandidaten-Objektregionen (322a-c) durch Ausschließen, aus dem Satz von Kandidaten-Objektregionen (322a-f), von Kandidaten-Regionen (322a-c) einer Größe, die die Schwellengröße nicht übersteigt, wobei der Satz von scheinbaren Objektregionen (322a-c) als der gefilterte Satz von Kandidaten-Objektregionen (322a-c) identifiziert wird.

6. Verfahren nach einem der vorhergehenden Ansprüche, ferner umfassend Erlangen einer Rauschpegelschätzung für die Wärmekamera (1) und Bestimmen der Schwellenintensität basierend auf der Rauschpegelschätzung.

7. Verfahren nach einem der vorhergehenden Ansprüche, wobei jeder jeweilige Bildpunkt der Objekt-Randregion (323b) auf eine jeweilige repräsentativ Objektintensität eingestellt wird, bestimmt aus einem oder mehreren tatsächlichen Objektbildpunkten der tatsächlichen Objektregion (324), die dem jeweiligen Bildpunkt der Objekt-Randregion (323b) am nächsten liegt.

8. Verfahren nach einem der vorhergehenden Ansprüche, wobei die repräsentative Objektintensität als eines von Folgenden bestimmt wird: ein Mittelwert, ein Median, ein Maximum, ein Minimum und ein Modalwert des einen oder der mehreren tatsächlichen Objektbildpunkte.

9. Verfahren nach einem der vorhergehenden Ansprüche, ferner umfassend Identifizieren mindestens einer ersten Spitzenregion (P1) in der Häufigkeitsverteilung, wobei die repräsentative Bildpunktintensität aus Bildpunktwerten innerhalb der ersten Spitzenregion bestimmt wird.

10. Verfahren nach Anspruch 9, ferner umfassend Identifizieren einer zweiten Spitzenregion (P2) in der Häufigkeitsverteilung, wobei die repräsentative Bildpunktintensität aus den Bildpunktwerten innerhalb der ersten Spitzenregion (P1), aber nicht Bildpunktwerten innerhalb der zweiten Spitzenregion (P2) bestimmt wird.

11. Verfahren nach einem der vorhergehenden Ansprüche, wobei das Wärmebild Wärmebild-Rohdaten umfasst.

12. Computerprogrammprodukt, umfassend Computerprogramm-Codeabschnitte, die konfiguriert sind, das Verfahren nach einem der Ansprüche 1-11 durchzuführen, wenn sie durch eine Verarbeitungsvorrichtung (28) ausgeführt werden.

13. Wärmekamera (1), umfassend eine Verarbeitungsvorrichtung (28), die konfiguriert ist, das Verfahren nach einem der Ansprüche 1-11 durchzuführen.

## Revendications

1. Procédé de traitement d'images thermiques mis en œuvre par ordinateur, le procédé comprenant les étapes suivantes :
obtenir une image thermique (32) acquise par un capteur d'image d'une caméra thermique (1), l'image thermique représentant une scène (2) comprenant un ensemble d'objets (4a-c) ;
identifier un ensemble de régions d'objets apparentes (322a-c) dans l'image thermique (32),
chaque région d'objet apparente (322a-c) comprenant une représentation d'un objet respectif de l'ensemble d'objets (4a-c) qui est floue en raison de la diffraction dans la caméra thermique, et
chaque région d'objet apparente (322) étant identifiée comme une région contiguë de pixels ayant des intensités de pixels différant d'une intensité de arrière-plan représentative d'un arrière-plan thermique de la scène (1) de plus d'une intensité seuil, et étant d'une taille dépassant une taille seuil de sorte que la région d'objet apparente (322) comprend une région d'objet réelle (324) d'au moins un pixel d'objet réel comprenant une contribution de rayonnement de l'objet respectif (4a-c) mais pas l'arrière-plan thermique, et une région de bord floue (323) de pixels de bord flous entourant la région d'objet réelle (324), chaque pixel de bord flou comprenant une contribution de rayonnement depuis à la fois l'objet et l'arrière-plan thermique ; et
appliquer à chaque région d'objet apparente (322) une étape d'amélioration du contraste comprenant les étapes suivantes :
diviser la région de bord floue (323) en une région de bord d'arrière-plan (323a) et une région de bord d'objet (323b) intermédiaire entre la région d'objet réelle (324) et la région de bord d'arrière-plan (323a) ; et
définir des pixels de la région de bord d'objet (323b) à une intensité d'objet représentative déterminée à partir d'un ou de plusieurs pixels d'objet réels de la région d'objet réelle (324), et des pixels de la région de bord d'arrière-plan (323a) à l'intensité d'arrière-plan représentative, l'intensité d'arrière-plan représentative étant déterminée comme l'une des valeurs suivantes : une moyenne, une médiane, une moyenne pondérée et un mode d'au moins une partie d'une distribution de fréquence des intensités de pixels de l'image thermique, ou une moyenne des intensités de pixels de tous les pixels de l'image thermique, ou une moyenne des intensités de pixels d'une région de l'image thermique connue pour représenter l'arrière-plan thermique (6).

2. Procédé selon la revendication 1, dans lequel le partitionnement de la région de bord floue (323) comprend les étapes suivantes :
identifier une limite (B2) de la région d'objet réelle (324) s'étendant à l'intérieur d'une limite (B1) de la région d'objet apparente (322) à une distance correspondant à une plage de flou prédéterminée du flou induit par diffraction ; et
désigner les pixels de la région de bord floue (323) situés à l'intérieur d'une fraction prédéterminée de ladite distance par rapport à la limite (B2) de la région d'objet réelle (324) en tant que pixels de la région de bord d'objet (323b), et les pixels de la région de bord floue (323) situés à l'extérieur de ladite fraction prédéterminée de ladite distance par rapport à la limite (B2) de la région d'objet réelle (324) en tant que pixels de la région de bord d'arrière-plan (323a).

3. Procédé selon la revendication 2, dans lequel la fraction prédéterminée se situe dans une plage de 0,3 à 0,7, ou de 0,4 à 0,6, telle qu'environ 0,5.

4. Procédé selon l'une quelconque des revendications 2 et 3, dans lequel l'identification de la limite (B2) de la région d'objet réelle (324) comprend d'identifier des pixels de la région d'objet apparente (322) ayant la distance la plus petite par rapport à la limite (B1) de la région d'objet apparente (322) correspondant au diamètre du flou.

5. Procédé selon l'une quelconque des revendications précédentes, dans lequel l'identification de l'ensemble de régions d'objet apparentes (322a-c) comprend les étapes suivantes :
identifier un ensemble de régions d'objet candidates (322a-e) dans l'image thermique (32), une région d'objet candidate (322a-f) étant identifiée comme une région contiguë de pixels ayant des intensités de pixels différant de l'intensité d'arrière-plan représentative de plus de l'intensité seuil ; et
déterminer un ensemble filtré de régions d'objet candidates (322a-c) en excluant de l'ensemble de régions d'objet candidates (322a-f) des régions candidates (322a-e) ayant une taille ne dépassant pas la taille seuil, l'ensemble de régions d'objet apparentes (322a-c) étant identifié comme étant l'ensemble filtré de régions d'objet candidates (322a-c).

6. Procédé selon l'une quelconque des revendications précédentes, comprenant en outre d'obtenir une estimation du niveau de bruit pour la caméra thermique (1), et de déterminer l'intensité de seuil sur la base de l'estimation du niveau de bruit.

7. Procédé selon l'une quelconque des revendications précédentes, dans lequel chaque pixel respectif de la région de bord d'objet (323b) est défini à une intensité d'objet représentative respective déterminée à partir d'un ou plusieurs pixels d'objet réels de la région d'objet réelle (324) la plus proche du pixel respectif de la région de bord d'objet (323b).

8. Procédé selon l'une quelconque des revendications précédentes, dans lequel l'intensité représentative de l'objet est déterminée comme l'une des valeurs suivantes : une moyenne, une médiane, un maximum, un minimum et un mode des un ou plusieurs pixels d'objet réels.

9. Procédé selon l'une quelconque des revendications précédentes, comprenant en outre d'identifier au moins une première région de pic (P1) dans la distribution de fréquences, l'intensité de pixel représentative étant déterminée à partir de valeurs de pixels à l'intérieur de la première région de pic.

10. Procédé selon la revendication 9, comprenant en outre d'identifier une deuxième région de pic (P2) dans la distribution de fréquences, l'intensité de pixel représentative étant déterminée à partir des valeurs de pixels à l'intérieur de la première région de pic (P1) mais pas des valeurs de pixels à l'intérieur de la deuxième région de pic (P2).

11. Procédé selon l'une quelconque des revendications précédentes, dans lequel l'image thermique comprend des données brutes d'image thermique.

12. Produit logiciel comprenant des parties de code de programme informatique configurées pour exécuter le procédé selon l'une quelconque des revendications 1 à 11, lorsqu'elles sont exécutées par un dispositif de traitement (28).

13. Caméra thermique (1) comprenant un dispositif de traitement (28) configuré pour exécuter le procédé selon l'une quelconque des revendications 1 à 11.
